# EUROPEAN PATENT SPECIFICATION

(11) **EP 3 732 219 B1**
(45) Date of publication and mention of the grant of the patent: **16.10.2024**
(21) Application number: 18833803.2
(22) Date of filing: 20.12.2018
(51) Int. Cl.: C08G 8/36, C08G 8/16, C10G 33/04

(54) **PREPARATION OF DESALTER EMULSION BREAKERS**
HERSTELLUNG VON ENTSALZER-EMULSIONSSPALTERN
PRÉPARATION D'AGENTS DE RUPTURE D'ÉMULSION DE DESSALAGE

(30) Priority: 28.12.2017 US 201762611293 P
(43) Date of publication of application: 04.11.2020
(73) Proprietor: Ecolab USA, Inc., St. Paul, Minnesota 55102 (US)
(72) Inventor: BRADEN, Michael L., Sugar Land, Texas 77479 (US); DHAWAN, Ashish, Aurora, Illinois 60502 (US); MASERE, Jonathan, Richmond, Texas 77406 (US)
(74) Representative: Godemeyer Blum Lenze Patentanwälte Partnerschaft mbB - werkpatent
(86) International application number: PCT/US2018/066760
(87) International publication number: WO 2019/133430

(56) References cited:
- EP-A1- 0 222 587
- US-A- 4 737 265
- US-A1- 2015 307 788
- US-B1- 6 465 528

## Description

### FIELD OF THE INVENTION

The present disclosure generally relates to a class of alkoxylated 4-(alkyloxy)phenol/aldehyde polymer resins. Moreover, the disclosure generally relates to a process for preparing the polymer comprising reacting a 4-(alkyloxy)phenol compound with an aldehyde after which the resultant polymer is further modified by reaction in with epoxides to yield the desired alkoxylated 4-(alkyloxy)phenol/aldehyde resin. In addition to the foregoing, the disclosure also generally relates to a method of breaking a stable emulsion of water and oil comprising by introducing an effective dose of an emulsion breaker composition to contact and to destabilize the emulsion, wherein the emulsion breaker composition comprises the disclosed composition of which alkoxylated 4-(alkyloxy)phenol/aldehyde resin is a prototype of the composition active.

### BACKGROUND OF THE INVENTION

From a range of chemical industries spanning from oil-and-gas to petrochemicals, water and hydrocarbon come into contact so frequently such that highly stable oil-in-water, water-in-oil-in-water, and water-in-oil emulsions can occur quite prevalently in many industrial operations.

There are three methods of breaking or resolving emulsions, namely; (i) storage of the emulsions over a long period of time; (ii) heating the emulsions, and; (iii) the addition of chemicals that break the emulsions. Storage of the emulsions is impractical since the operations are continuous and the quantities of the produced fluids are enormous. Heating large volumes of produced fluids is challenging and cost prohibitive in terms of the large amount of energy consumed in the process. Thus, using emulsion breakers, also called demulsifiers, is both economical and efficient.

Apart from the separation of oil and water in emulsions, emulsion breakers can also be used to resolve the water-in-oil emulsion that is formed when water is added to the refinery's desalter crude slate for the extraction of salts from crude oil prior to refining. This is an important step when the crude oil is contaminated with inorganic salts. Unless the salts in oil are removed prior to refining operations, the salts can decompose into acidic, corrosive species during the process. These acidic species can corrode and damage the refinery equipment. To remove the inorganic salts, an appropriate amount of relatively clean water, hereafter called wash water, is added to crude oils, and the mixture is mechanically agitated. This procedure results in the formation of stable water-in-oil emulsions. The use of chemical demulsifiers is advantageous for breaking the water-in-oil emulsions. Chemical demulsifiers are generally surfactants that partition on the interface of the water droplets and the bulk hydrocarbon phase. The demulsifiers slightly lower the interfacial surface tension between the aqueous phase and the hydrocarbon phase, remove natural stabilizers (e.g., natural surfactants, organic solids, and inorganic solids) from the interface, and allow the water droplets to coalesce. Through these processes, the previously stable emulsions are resolved.

Ethoxylated alkylphenol/formaldehyde resins, particularly resins with the nonylphenol moiety in the backbone of the resin, have been used in the industry as the typical chemical demulsifiers. However, nonylphenols and their ethoxylated derivatives are known to be toxic, specifically as endocrine-hormone disrupters. Thus, there is a need to replace these chemistries with nonylphenol-free alternatives that are more environmentally friendly. It is, therefore, a three-fold object of the disclosure is to provide novel non-alkylphenol polymers, processes for making said polymers, and methods of breaking an emulsion of water and oil using said novel polymers.

### BRIEF SUMMARY OF THE INVENTION

Also disclosed is a polymer corresponding in structure to Formula (5A): 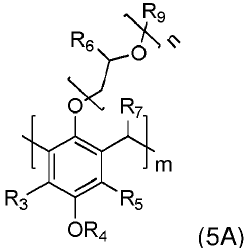 wherein R₃ and R₅ are independently H or C₁-C₂₂ alkyl; R₄ is C₄-C₂₂ alkyl; R₆ is H, alkyl, or aryl; R₇ is H, alkyl, benzyl, or arylalkyl; R₉ is hydrogen, alkyl, or alkylaryl; m is an integer from 4 to 75; and n is an integer from 0 to 20.

The disclosure also relates to a process for the preparation of the polymer corresponding in structure to Formula (5), the process comprising contacting a compound corresponding in structure to Formula (3): 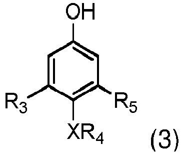 with an aldehyde to provide a polymer corresponding in structure to Formula (4): 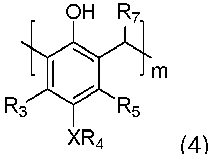 and contacting the polymer of Formula (4) with an epoxide to provide the polymer of formula (5), wherein R₃-R_{g},m, and n are defined as above X is O.

Also disclosed is a process for the preparation of the polymer corresponding in structure to Formula (5A), the process comprising contacting a compound corresponding in structure to Formula (3A): 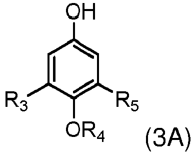 with an aldehyde to provide a polymer corresponding in structure to Formula (4A): 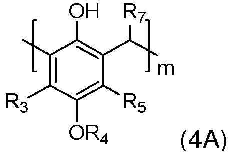 and contacting the polymer of Formula (4A) with an epoxide to provide the polymer of formula (5A), wherein R₃-R₇, m, and n are defined as above.

The disclosure additionally relates to a method of breaking an emulsion of water and oil comprising introducing an effective amount of an emulsion breaker composition into contact with the emulsion to destabilize the emulsion, wherein the emulsion breaker composition comprises a polymer corresponding in structure to Formula (5).

Other objects and features will be in part apparent and in part pointed out hereinafter.

### DETAILED DESCRIPTION OF THE INVENTION

The present disclosure is directed to alkoxylated 4-(alkyloxy)phenol-aldehyde polymers, processes of preparing the polymers, and methods for the improved separation of water and oil in oil production and processing operations using the novel polymers.

The disclosure is directed to an oligomer or polymer corresponding in structure to Formula (5A): 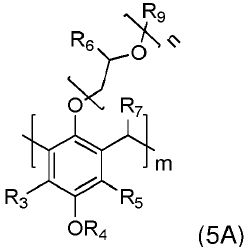 wherein R₃ and R₅ are independently H or C₁-C₂₂ alkyl; R₄ is C₄-C₂₂ alkyl; R₆ is H, alkyl, or aryl; R₇ is H, benzyl, or arylalkyl; R₉ is hydrogen, alkyl, or alkylaryl; m is an integer from 4 to 75; and n is an integer from 1 to 20.

The polymer of Formula 5A can have n be 1-20, 2-20, 3-20, 4-20, 5-20, 1-16, 2-16, 3-16, 4-16, 5-16, 1-14, 2-14, 3-14, 4-14, 5-14, 1-12, 2-12, 3-12, 4-12, 5-12, 1-11, 2-11, 3-11, 4-11, or 5-11.

The polymer of Formula 5A can have a weight average molecular weight of from about 1000 to about 15000 Daltons, from about 1000 to about 13600 Daltons, from about 1000 to about 10000 Daltons, from about 1000 to about 8000 Daltons, from about 1000 to about 6000 Daltons, from about 2000 to about 15000 Daltons, from about 2000 to about 13600 Daltons, from about 2000 to about 10000 Daltons, from about 2000 to about 8000 Daltons, from about 2000 to about 6000 Daltons, from about 3000 to about 15000 Daltons, from about 3000 to about 13600 Daltons, from about 3000 to about 10000 Daltons, from about 3000 to about 8000 Daltons, from about 3000 to about 6000 Daltons from about 4000 to about 15000 Daltons, from about 4000 to about 13600 Daltons, from about 4000 to about 10000 Daltons, from about 4000 to about 8000 Daltons, from about 4000 to about 6000 Daltons, from about 4500 to about 15000 Daltons, from about 4500 to about 13600 Daltons, from about 4500 to about 10000 Daltons, from about 4500 to about 8000 Daltons, or from about 4500 to about 6000 Daltons.

Preferably, the polymer of Formula 5A has a weight average molecular weight of from about 4500 to about 6000 Daltons.

In a polymer of Formula 5A, R₄ is C₄-C₁₆ alkyl, R₄ is C₄-C₁₂ alkyl, or R₄ is C₈-C₁₂ alkyl. Preferably, R₄ is C₈.

Also a polymer of Formula 5A can have R₃ and R₅ independently be hydrogen or methyl. Preferably, R₃ and R₅ are hydrogen.

Polymers of Formula 5A have R₆ as hydrogen, methyl, butyl, or benzyl, or R₆ is methyl or hydrogen.

Additionally the polymer of Formula 5A can have R₇ be arylalkyl; preferably, R₇ is benzyl.

Further, the polymer of Formula 5A can have R₉ be hydrogen or C₁-C₆ alkyl; preferably, R₉ is hydrogen.

Another aspect of the present disclosure is a process for the preparation of the polymer corresponding in structure to Formula (5A) as described above. The process comprises contacting a compound corresponding in structure to Formula (3A): 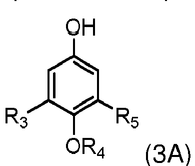 with an aldehyde to provide a polymer corresponding in structure to Formula (4A): 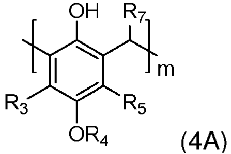 and contacting the polymer of Formula (4A) with an epoxide to provide the polymer of formula (5A) as described above, wherein R₃ and R₅ are independently H or C₁-C₂₂ alkyl or alkyloxy; R₄ is C₄-C₂₂ alkyl; m is an integer from 4 to 75; and n is an integer from 1 to 20.

The process can also further comprise contacting a compound corresponding in structure to Formula (1): 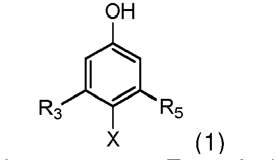 with a compound corresponding in structure to Formula (2):

Ra-L (2)

to provide the compound corresponding in structure to Formula (3), wherein R₃ and R₅ are independently H or C₁-C₂₂ alkyl or alkyloxy; R₄ is C₄-C₂₂ alkyl; X is -OH R₈ is hydrogen or C₁-C₄ alkyl; and L is hydroxy or halide.

The epoxide can be selected from the group consisting of ethylene oxide, propylene oxide, butylene oxide, styrene oxide, and combinations thereof. More preferably, the epoxide is selected from the group consisting of ethylene oxide, propylene oxide, and combinations thereof. Most preferably, the epoxide is ethylene oxide.

The aldehyde can be formaldehyde, benzaldehyde, or vanillin.

The compound corresponding in structure to Formula (3) can be contacted with the aldehyde in acidic or basic conditions. The polymer corresponding in structure to Formula (4) can be contacted with the epoxide in basic conditions.

This disclosure is also related to a method of breaking an emulsion of water and oil comprising introducing an effective amount of an emulsion breaker composition to contact the emulsion to destabilize the emulsion, wherein the emulsion breaker composition comprises a polymer corresponding in structure to Formula (5) as defined above. The polymer-containing treatments are effective treatments for resolving (breaking or inhibiting) emulsions of water in oil.

The compositions described herein, are particularly useful as emulsion breakers for use in the oil and gas industry, and in particular, to demulsify water-in-oil emulsions in various crude oil production and refinery processes. Accordingly, a method includes breaking an emulsion comprising oil and water, the method including adding to the emulsion an effective amount of a composition disclosed herein. The compositions can be used for resolving a broad range of hydrocarbon emulsions encountered in crude oil production, refining and chemical processing. Specific examples include, but are not limited to, oilfield production emulsions, refinery desalting emulsions, refined fuel emulsions, and recovered oil emulsions (e.g., crude oil slop, used lubricant oils, and recovered oils in the steel and aluminum industries).

Additionally, methods described herein include breaking a crude oil emulsion comprising oil and water. The emulsion may be a water-in-oil emulsion. The emulsion may be a refinery desalting emulsion or a crude oil production emulsion.

In a refinery desalting process, the incoming crude may be deliberately mixed with wash water to remove dissolved salts and other contaminants. To extract water from the resulting water-in-crude oil emulsion, the emulsion can be admixed with an effective amount of a composition, as described above.

In the process of resolving crude petroleum oil emulsions of the water-in-oil type, the compositions can be brought into contact with or caused to act upon the emulsion to be treated in any of the various methods now generally used in the petroleum industry to resolve or break crude petroleum oil emulsions with a chemical agent.

The compositions can be administered in several ways. The compositions can be used alone or blended with other emulsion breaker components. An emulsion breaking solution composition may include about 1 wt.% actives to about 100 wt.% actives, about 1 wt.% actives to about 90 wt.% actives, about 1 wt.% actives to about 80 wt.% actives, about 1 wt.% actives to about 70 wt.% actives, about 1 wt.% actives to about 60 wt.% actives, about 1 wt.% actives to about 50 wt.% actives, about 5 wt.% actives to about 100 wt.% actives, about 5 wt.% actives to about 90 wt.% actives, about 5 wt.% actives to about 80 wt.% actives, about 5 wt.% actives to about 70 wt.% actives, about 5 wt.% actives to about 60 wt.% actives, about 5 wt.% actives to about 50 wt.% actives, about 10 wt.% actives to about 100 wt.% actives, about 10 wt.% actives to about 90 wt.% actives, about 10 wt.% actives to about 80 wt.% actives, about 10 wt.% actives to about 70 wt.% actives, about 10 wt.% actives to about 60 wt.% actives, or about 10 wt.% actives to about 50 wt.% actives.

The compositions may be used in combination with corrosion inhibitors, viscosity reducers, and other chemical treatments used in crude oil production, refining and chemical processing.

The water-in-oil emulsion is a refinery desalting emulsion. A typical desalting process includes the use of pumps to move the incoming crude oil from storage tanks via piping through one or more heat exchangers. Wash water may be injected into the heated oil stream and the stream intimately mixed by an in-line mixing device. The emulsified stream may flow into an electrostatic desalter vessel where resolution and separation of the crude oil and water effluent occur. Injection of a composition into the fluid stream can be carried out at various places along the path of the desalting process. Potential injection locations include prior to the crude oil storage tanks, on the outlet side of the crude oil storage tanks, upstream of the in-line mixer, into the wash water stream, and other potential locations.

For use in refinery desalting emulsions, the compositions can be applied to the oil phase, the water phase, or both phases. The compositions can be applied to the suction of the crude charge pump in the refinery crude unit - following current best practices. The compositions can also be applied to the desalter wash water - one or the other.

The amount of the compositions used for emulsion breaking applications depends on the particular crude oil emulsion being treated. Bottle tests may be conducted in order to determine the optimum dose and formulation. With regard to specific emulsions, the following doses are typical, but may vary outside of the following ranges due to the specific characteristics of the emulsion:
Oilfield production: about 5 ppm to about 500 ppm, or about 50 to about 500 ppm;
Desalting: about 1 ppm to about 60 ppm, or about 1 to about 40 ppm;
Refined fuels: about 1 ppm to about 500 ppm, or about 1 to about 50 ppm (pipeline);
about 1 to about 250 ppm (static storage);
Recovered oils: about 50 ppm to about 5000 ppm, or about 250 to about 3000 ppm;
Diesel/finished gasoline: about 1 ppm to about 500 ppm, or about 1 to about 75 ppm.

The compositions may be useful for other applications, such as resolving emulsions in butadiene, styrene, acrylic acid, and other hydrocarbon monomer process streams.

The emulsion breaker composition can comprise at least one solvent.

The hydrocarbon can be selected from the group consisting of crude oil, refined oil, fuel oil, diesel oil, bitumen, condensate, and combinations thereof. More specifically, the hydrocarbon can be crude oil present in a desalting process.

The method can further comprise adding wash water, and an emulsion breaker to the crude oil. Upon agitation, the mixture becomes an emulsion composition. Owing to the presence of the emulsion breaker, the water that subsequently turns into brine separates from the crude oil as the salt-laden aqueous phase of the broken emulsion.

The effective amount of the emulsion breaker composition can be from about 1 ppm to about 1000 ppm. Preferably, the effective amount of the emulsion breaker composition is from about 1 ppm to about 900 ppm, from about 1 ppm to about 800 ppm, from about 1 ppm to about 700 ppm, from about 1 ppm to about 600 ppm, or from about 1 ppm to about 500 ppm. Further, the effective amount of the emulsion breaker composition can be from about 1 ppm to about 250 ppm, from about 1 ppm to about 200 ppm, from about 1 ppm to about 100 ppm, from about 1 ppm to about 75 ppm, from about 1 ppm to about 50 ppm, from about 1 ppm to about 25 ppm, from about 1 ppm to about 15 ppm, or from about 1 ppm to about 10 ppm.

The emulsion breaker can be combined with a reverse emulsion breaker and added together to the emulsion. The reverse emulsion breaker is added to the wash water; the emulsion breaker is normally added to the crude oil.

Unless otherwise indicated, an alkyl group as described herein alone or as part of another group is an optionally substituted linear saturated monovalent hydrocarbon substituent containing from one to sixty carbon atoms and preferably one to thirty carbon atoms in the main chain or eight to thirty carbon atoms in the main chain, or an optionally substituted branched saturated monovalent hydrocarbon substituent containing three to sixty carbon atoms, and preferably eight to thirty carbon atoms in the main chain. Examples of unsubstituted alkyl groups include methyl, ethyl, *n*-propyl, *i*-propyl, *n*-butyl, *i*-butyl, *s*-butyl, *t*-butyl, *n*-pentyl, *i*-pentyl, *s*-pentyl, *t*-pentyl, and the like.

The terms "aryl" or "ar" as used herein alone or as part of another group (e.g., arylalkyl) denote optionally substituted homocyclic aromatic groups, preferably monocyclic or bicyclic groups containing from 6 to 12 carbons in the ring portion, such as phenyl, biphenyl, naphthyl, substituted phenyl, substituted biphenyl or substituted naphthyl. Phenyl and substituted phenyl are the more preferred aryl. The term "aryl" also includes heteroaryl functional groups.

"Arylalkyl" means an aryl group attached to the parent molecule through an alkylene group. The number of carbon atoms in the aryl group and the alkylene group is selected such that there is a total of about 6 to about 18 carbon atoms in the arylalkyl group. A preferred arylalkyl group is benzyl.

The term "substituted" as in "substituted aryl," "substituted alkyl," and the like, means that in the group in question (i.e., the alkyl, aryl or other group that follows the term), at least one hydrogen atom bound to a carbon atom is replaced with one or more substituent groups such as hydroxy (-OH), alkylthio, phosphino, amido (-CON(R_{A})(R_{B}), wherein R_{A} and R_{B} are independently hydrogen, alkyl, or aryl), amino(-N(R_{A})(R_{B}), wherein R_{A} and R_{B} are independently hydrogen, alkyl, or aryl), halo (fluoro, chloro, bromo, or iodo), silyl, nitro (-NO₂), an ether (-OR_{A} wherein R_{A} is alkyl or aryl), an ester (-OC(O)R_{A} wherein R_{A} is alkyl or aryl), keto (-C(O)R_{A} wherein R_{A} is alkyl or aryl), heterocyclo, and the like. When the term "substituted" introduces a list of possible substituted groups, it is intended that the term apply to every member of that group. That is, the phrase "optionally substituted alkyl or aryl" is to be interpreted as "optionally substituted alkyl or optionally substituted aryl."

Having described the invention in detail, it will be apparent that modifications and variations are possible without departing from the scope of the invention defined in the appended claims.

### EXAMPLES

The following non-limiting examples are provided to further illustrate the present invention.

### Example 1: Synthesis of 4-(octyloxy)phenol

The synthesis of 4-(octyloxy)phenol was completed using the reagents specified in Table 1.

**Table 1**

| *Reagent* | *Molecular Weight (g*/*mol)* | *Weight (g)* | *Weight (mol)* | *Mol reagent* / *mol hydroquinone* |
|---|---|---|---|---|
| Hydroquinone | 110.11 | 200 | 1.82 | 1.00 |
| 1-bromooctane | 193.12 | 293 | 1.52 | 0.84 |
| Potassium hydroxide | 56.10 | 100 | 2.00 | 0.98 |
| Potassium iodide | 166.02 | 0.2 | 0.001 | |
| Ethanol (reagent grade) | | 1200 | | |

Dichloromethane, hexanes, distilled water, and concentrated hydrochloric acid were also used. Ethanol was charged to a 3-L four-necked reactor equipped with an overhead stirrer, nitrogen purge, temperature probe, a dropping funnel, and a condenser. The overhead stirrer was adjusted to a speed of approximately 500 rpm. A very slow nitrogen purge was started. Potassium hydroxide pellets were charged to the reactor. The reactor was heated to 40 °C and held for 30 minutes. Hydroquinone and potassium iodide were charged to the reactor and the reaction temperature was increased to 65°C.

Into a dropping funnel was charged 1-bromooctane, which was added into the reactor over a period of three hours, while maintaining stirring and temperature of 65 °C. Stirring was continued at 65 °C until no 1-bromooctane was left in the solution as monitored by GC-MS. This process typically requires 8-10 hours.

The reaction was subsequently cooled to room temperature and acidified to a pH of 2.0 with concentrated hydrochloric acid. Approximately 300 mL deionized (DI) water was added and the reaction mixture was stirred for 15 minutes. The reaction mixture was extracted twice with 20 mL dichloromethane. The combined organic phase was then washed three times with 200 mL DI water, dried over Na₂SO₄, and concentrated *in vacuo* to provide off-white solids. The crude solids were washed with minimum amounts of cold hexanes to provide pure 4-(octyloxy)phenol. The sample was dried in a 40°C oven.

### Example 2: Reaction of 4-(octyloxy)phenol and Paraformaldehyde

The following reagents and amounts thereof were used in the reaction: 250 g (1.12 mol) 4-(octyloxy)phenol; 33.65 g (1.12 mol.) paraformaldehyde, divided into two equal parts of 16.82 g; 300 g heavy aromatic naphtha; 2.33 g branched dodecylbenzenesulfonic acid (DDBSA).

To a 1 L four-necked round bottom flask was added 4-(octyloxy)phenol, heavy aromatic naphtha, and branched DDBSA; the flask was equipped with an overhead stirrer, N₂ purge, temperature probe, and Dean-Stark trap with condenser. The overhead stirrer was started along with a very slow nitrogen purge (approximately one bubble per five seconds). Water was turned on to the condenser. In the case of small scale reactions (less than 100 g total), the Dean-Stark trap was filled with heavy aromatic naphtha.

The reaction flask was heated to 65 °C. Once a consistent temperature of 65 °C was achieved, the first charge of paraformaldehyde was added. The temperature was recorded every 30 seconds until the exotherm stopped and the reactor cooled 4-5 °C from the maximum exotherm for a 15-20 °C exotherm. The reactor was returned to 65 °C.

Once a temperature of 65 °C was attained, the second charge of paraformaldehyde was added. The temperature was recorded every 30 seconds until exotherm was reached and the reactor cooled 1-3°C from the maximum exotherm for a 1-10 °C exotherm. The temperature was subsequently increased to 95 °C. Once the reaction mixture achieved 95 °C, and held at this temperature for three hours. As each hour elapsed during the period within which the temperature was maintained at 95 °C, a 2-3 mL aliquot of the reaction mixture was removed. At the end of the three hours, the temperature was increased to 180°C or reflux temperature. The reaction flask and the Dean-Stark trap arm were wrapped with glass wool and aluminum foil to minimize heating needed to reflux. At reflux temperature, the reaction was held for three hours. For every interval of 1 hour, a 2-3 mL aliquot of the reaction mixture was removed. At the end of the three-hour reaction period, the reaction was left to cool overnight. The amount of water removed was recorded. When the reaction mixture was cooled, was transferred into a tare bottle. The weight of the sample recovered was recorded.

### Example 3: Addition of ethylene oxide to 4-(octyloxy)phenol/formaldehyde resin

The following reagents and amounts thereof were used in the reaction: 570.00 g 4-(octyloxy)phenol/formaldehyde resin of known concentration; 3.00 g potassium hydroxide (45% in water); about 30-35 mL heavy aromatic naphtha; ethylene oxide.

To a 1 L four-necked round bottom flask was added 4-(octyloxy)phenol/formaldehyde resin and potassium hydroxide; the flask was equipped with an overhead stirrer, an nitrogen purge, a Dean-Stark trap with condenser, and a temperature probe. The stirrer was started at moderate speed, as the nitrogen purge was started at a rate of one bubble per second. The water flow was turned on to the condenser and the Dean-Stark trap was filled to the neck with heavy aromatic naphtha. The temperature was set to 150 °C and heating was started.

Water was distilled from the base catalyst. A 5 mL sample was collected for Karl-Fischer water analysis. If the sample contained more than 0.1% water, distillation was continued for 30 minutes and analysis was repeated.

When the sample contained less than 0.1% water, the flask was cooled to 60°C. Once the reaction mixture reached 60°C, the N₂ purge was increased. Under N₂ purge, the contents of the flask were poured into a tared nitrogen-filled one quart bottle. The contents of the bottle were then transferred to the Lab Oxyalkylation Unit Paar Reactor. The Paar Reactor was buttoned up and purged with nitrogen from three to four times. The pressure was set to 5 psi with nitrogen.

The reactor was heated to 150 °C. Once stabilized, ethylene oxide was added until the pressure reached 60 psi. The weight of the ethylene oxide added to the reactor was recorded. The pressure was allowed to decrease, indicating a chemical reaction. When the pressure reached 10 psi, the desired amount of ethylene oxide needed to complete a one-mole addition was added, or until the pressure reached 60 psi. The pressure was continually allowed to decrease and ethylene oxide added until the pressure reached 60 psi until the desired amount of ethylene oxide was added and reacted.

Once the desired amount of ethylene oxide was added and reacted, a 50 mL sample was taken under safe conditions. This retrieved aliquot was recorded and the amount of ethylene oxide needed for the next one mole addition of EO was calculated. On the pressure reaching 10 psi, the desired amount of ethylene oxide needed to complete a one-mole addition was added, or until the pressure reached 60 psi. The pressure was allowed to decrease and the process was continued until the desired amount of ethylene oxide was added and consumed by the reaction. This same process was repeated until the entire ethylene oxide series was completed. The reaction mixture was removed from the Paar reactor. For each ethylene oxide sample, 5 g was submitted for NMR determination of actual ethylene oxide added.

### Example 4: Portable Electric Desalter Procedure

A sample of chemically untreated raw crude oil was thoroughly mixed. The raw crude oil and wash water (about 5.0 volume %) were added to a glass container to a total of 100 mL. 6-60 ppm of the emulsion breaker formulation was added to each container. The containers were placed in a water bath and allowed to equilibrate to 90 °C (approximately 15 minutes minimum). The contents of the container were poured into a blender jar. Blending conditions were set to maintain a stable emulsion during the time the emulsion remained in the portable electric desalter (PED) unit before the high voltage field was applied.

When all tubes were blended, the tubes were placed into the PED unit. The tubes were heated for 5 minutes at 120 °C. After 5 minutes, the amount of water that separated in each PED tube was recorded. After 7 minutes, an electrical field was induced (adjusted from 0-3,000 volts; typically 500 volts used) for a period of one minute. After the high voltage had been applied, at 10 minutes total test duration, the amount of water that separated in each tube was recorded. The 120 °C temperature was maintained and the amount of water separation at 15 minutes was recorded.

At 17 minutes, a high voltage (normally 3,000 volts) was applied for a one-minute period. The amount of water separation was recorded at 20 and 25 minutes. At 27 minutes, a high voltage (normally 3,000 volts) was applied for a one-minute period. The amount of water separation was recorded at 30 and 35 minutes. If necessary, at 37 minutes, a high voltage (normally 3,000 volts) was applied for a one minute period. The amount of water separation was recorded at 40 minutes. The amount of water separation and rag layer (if any) was recorded at 50 and 60 minutes.

Table 2 shows the number of added ethylene epoxide units, or the degree of ethoxylation of the ethoxylated 4-(octyloxy)phenol/formaldehyde resin in the active polymer in the samples tested. These resins were tested against RESOLV^{®}, a desalter management program sold by Nalco-Champion (An Ecolab Company). PED test results are listed in Tables 3-8.

**Table 2**

| *Sample* | *Degree of Ethoxylation* |
|---|---|
| B | 4 |
| C | 5 |
| D | 6 |
| E | 7 |
| F | 8 |
| G | 9 |

Table 3 indicates the results of PED tests on crude oil A.

**Table 3**

| | *Water Separation in Percent at Time (min.) at 10 ppm sample conc.* | | | | | | | |
|---|---|---|---|---|---|---|---|---|
| **Sample** | **5** | **10** | **15** | **20** | **25** | **30** | **40** | **Rag** |
| Blank | 0.3 | 0.8 | 8.8 | 10.0 | 10.0 | 30.0 | 32.5 | 3.1 |
| RESOLV | 75.0 | 82.5 | 87.5 | 90.0 | 93.8 | 93.8 | 95.0 | 0.2 |
| B | 0.8 | 2.5 | 12.5 | 15.0 | 42.5 | 60.0 | 70.0 | 0.4 |
| C | 80.0 | 87.5 | 90.0 | 93.8 | 95.0 | 95.0 | 95.0 | 0.2 |
| D | 32.5 | 55.5 | 60.0 | 75.0 | 81.3 | 82.5 | 87.5 | 0.5 |
| E | 30.0 | 70.0 | 82.5 | 90.0 | 93.8 | 93.8 | 97.5 | 0.1 |
| F | 20.0 | 50.0 | 80.0 | 87.5 | 90.0 | 95.0 | 97.5 | 0.1 |
| G | 10.0 | 12.5 | 37.5 | 45.0 | 65.0 | 70.0 | 75.0 | 0.8 |

Table 4 indicates results of a PED test on crude oil B samples.

**Table 4**

| | *Water Separation in Percent at Time (min.) at 15 ppm sample conc.* | | | | | | | | | | |
|---|---|---|---|---|---|---|---|---|---|---|---|
| **Sample** | **5** | **10** | **15** | **20** | **25** | **30** | **35** | **40** | **45** | **50** | **60** |
| Blank | 0.5 | 1.5 | 6.3 | 10.0 | 15.0 | 17.5 | 22.5 | 25.0 | 32.5 | 37.5 | 50.0 |
| RESOLV | 6.3 | 8.8 | 12.5 | 20.0 | 25.0 | 42.5 | 50.0 | 62.5 | 70.0 | 72.5 | 75.0 |
| B | 6.3 | 10.0 | 7.5 | 17.5 | 22.5 | 40.0 | 45.0 | 50.0 | 57.5 | 60.0 | 62.5 |
| C | 7.5 | 12.5 | 17.5 | 25.0 | 32.5 | 50.0 | 57.5 | 67.5 | 75.0 | 75.0 | 78.8 |
| D | 2.5 | 10.0 | 15.0 | 21.3 | 25.0 | 47.5 | 55.0 | 65.0 | 70.0 | 75.0 | 75.0 |
| E | 1.3 | 8.8 | 12.5 | 20.0 | 27.5 | 40.0 | 50.0 | 57.5 | 62.5 | 65.0 | 72.5 |
| F | 0.8 | 8.8 | 11.3 | 18.8 | 27.5 | 42.5 | 52.5 | 60.0 | 65.0 | 70.0 | 75.0 |
| G | 0.8 | 10.0 | 12.5 | 20.0 | 25.0 | 40.0 | 50.0 | 55.0 | 62.5 | 67.5 | 70.0 |

Table 5 indicates results of a PED test on crude oil B.

**Table 5**

| | *Water Separation in Percent at Time (min.) at 15 ppm sample conc.* | | | | | | | | |
|---|---|---|---|---|---|---|---|---|---|
| **Sample** | **5** | **10** | **15** | **20** | **25** | **30** | **35** | **40** | **50** |
| Blank | 0.0 | 0.8 | 1.0 | 7.5 | 17.5 | 27.5 | 35.0 | 45.0 | 60.0 |
| RESOLV | 0.5 | 1.0 | 2.5 | 62.5 | 67.5 | 75.0 | 75.0 | 75.0 | 75.0 |
| B | 0.8 | 1.3 | 12.5 | 45.0 | 60.0 | 65.0 | 65.0 | 65.0 | 65.0 |
| C | 0.8 | 5.0 | 10.0 | 65.0 | 72.5 | 77.5 | 77.5 | 81.3 | 85.0 |
| D | 0.0 | 0.8 | 2.5 | 65.0 | 75.0 | 75.0 | 77.5 | 81.3 | 87.5 |
| E | 0.0 | 0.5 | 1.3 | 55.0 | 65.0 | 75.0 | 75.0 | 80.0 | 80.0 |
| F | 0.0 | 0.3 | 0.8 | 50.0 | 65.0 | 75.0 | 75.0 | 80.0 | 80.0 |
| G | 0.0 | 0.3 | 0.8 | 42.5 | 55.0 | 65.0 | 65.0 | 67.5 | 70.0 |

Table 6 indicates results of a PED test on crude oil C.

**Table 6**

| | *Water Separation in Percent at Time (min.) at 15 ppm sample conc.* | | | | | | |
|---|---|---|---|---|---|---|---|
| **Sample** | **5** | **10** | **15** | **20** | **25** | **30** | **40** |
| Blank | 1.3 | 7.5 | 12.5 | 32.5 | 42.5 | 67.5 | 72.5 |
| RESOLV | 15.0 | 22.5 | 45.0 | 62.5 | 67.5 | 85.0 | 90.0 |
| B | 22.5 | 36.3 | 45.0 | 57.5 | 62.5 | 77.5 | 77.5 |
| C | 17.5 | 35.0 | 45.0 | 60.0 | 67.5 | 85.0 | 87.5 |
| D | 17.5 | 63.3 | 47.5 | 65.0 | 72.5 | 87.5 | 90.0 |
| E | 12.5 | 33.8 | 45.0 | 62.5 | 67.5 | 85.0 | 87.5 |
| F | 11.3 | 25.0 | 40.0 | 550 | 62.5 | 75.0 | 82.5 |
| G | 6.3 | 17.5 | 25.0 | 42.5 | 47.5 | 72.5 | 75.0 |

Table 7 indicates results of a PED test on oil E.

When introducing elements of the present invention or the preferred embodiments(s) thereof, the articles "a", "an", "the" and "said" are intended to mean that there are one or more of the elements. The terms "comprising", "including" and "having" are intended to be inclusive and mean that there may be additional elements other than the listed elements.

In view of the above, it will be evident that the several objects of the invention are achieved and other advantageous results attained.

## Claims

1. A polymer corresponding in structure to Formula (5A): 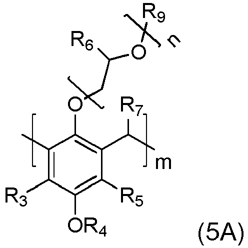 wherein:
R₃ and R₅ are independently H or C₁-C₂₂ alkyl or alkyloxy;
R₄ is C₄₋₂₂ alkyl;
R₆ is H, alkyl, or aryl;
R₇ is H, alkyl, aryl, or arylalkyl;
R₉ is hydrogen, alkyl, or alkylaryl;
m is an integer from 4 to 75; and
n is an integer from 1 to 20.

2. The polymer of claim 1, wherein n is an integer from 2 to 20; preferably, wherein n is an integer from 4 to 16; more preferably, wherein n is an integer from 4 to 10.

3. The polymer of claim 1 or 2, wherein R₄ is C₄-C₁₆ alkyl; preferably, wherein R₄ is C₄-C₁₂ alkyl; more preferably, wherein R₄ is C₈-C₁₂ alkyl; most preferably, wherein R₄ is octyl.

4. The polymer of any one of claims 1 to 3, wherein R₃ and R₅ are independently hydrogen or methyl; preferably, wherein R₃ and R₅ are hydrogen.

5. The polymer of any one of claims 1 to 4, wherein R₆ is hydrogen, methyl, butyl, or benzyl; preferably, wherein R₆ is methyl; or, wherein R₆ is hydrogen.

6. The polymer of claim 5, wherein R₇ is aryl; preferably, wherein R₇ is phenyl.

7. The polymer of any one of claims 1 to 6, wherein R₉ is hydrogen or C₁-C₆ alkyl; preferably, wherein R₉ is hydrogen.

8. The polymer of any one of claims 1 to 7, wherein the polymer has a weight average molecular weight of from about 1000 to about 15000 Daltons; preferably, wherein the polymer has a weight average molecular weight of from about 4000 Daltons to about 6000 Daltons.

9. A process for the preparation of the polymer of any of claims 1 to 8, the process comprising:
contacting a compound corresponding in structure to Formula (3): 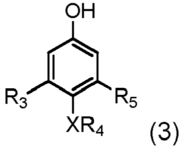 with an aldehyde to provide a polymer corresponding in structure to Formula (4): 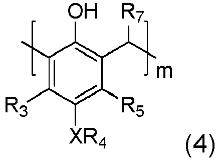 and contacting the polymer of Formula (4) with an epoxide to provide the polymer of formula (5A);
wherein:
R₃ and R₅ are independently H or C₁-C₂₂ alkyl or alkyloxy;
R₄ is C₄₋₂₂ alkyl;
R₇ is H, alkyl, aryl, or arylalkyl;
X is -O-;
R₈ is hydrogen or C₁-C₄ alkyl;
m is an integer from 4 to 75; and
n is an integer from 1 to 20.

10. The process of claim 9, wherein the compound having the structure of Formula 3 has the structure of Formula 3A 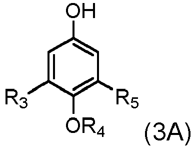 and the polymer having the structure of Formula 4 has the structure of Formula 4A

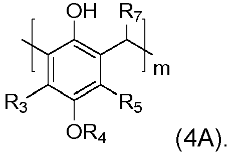

11. The process of claim 10, wherein the process further comprises the step of contacting a compound corresponding in structure to Formula (1): 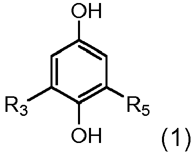
with a compound corresponding in structure to Formula (2):
R₄-X (2)
to provide the compound corresponding in structure to Formula (3);
wherein:
R₃ and R₅ are independently H or C₁-C₂₂ alkyl;
R₄ is C₄₋₂₂ alkyl; and
X is hydroxy or halide.

12. A method of breaking an emulsion of water and oil comprising introducing an effective amount of an emulsion breaker composition into contact with the emulsion to destabilize the emulsion, wherein the emulsion breaker composition comprises a polymer of any one of claims 1 to 8.

13. Use of an emulsion breaker composition comprising a polymer of any one of claims 1 to 8 for breaking an emulsion of water and oil.

## Patentansprüche

1. Polymer, dessen Struktur Formel (5A) entspricht: 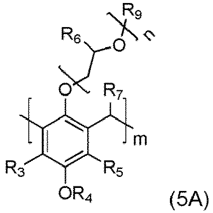 wobei:
R₃ und R₅ unabhängig H oder C₁-C₂₂-Alkyl oder Alkyloxy sind;
R₄ C₄₋₂₂-Alkyl ist;
R₆ H, Alkyl oder Aryl ist;
R₇ H, Alkyl, Aryl oder Arylalkyl ist;
R₉ Wasserstoff, Alkyl oder Alkylaryl ist;
m eine ganze Zahl von 4 bis 75 ist; und
n eine ganze Zahl von 1 bis 20 ist.

2. Polymer nach Anspruch 1, wobei n eine ganze Zahl von 2 bis 20 ist; vorzugsweise, wobei n eine ganze Zahl von 4 bis 16 ist; mehr bevorzugt, wobei n eine ganze Zahl von 4 bis 10 ist.

3. Polymer nach Anspruch 1 oder 2, wobei R₄ C₄-C₁₆-Alkyl ist; vorzugsweise, wobei R₄ C₄-C₁₂-Alkyl ist; mehr bevorzugt, wobei R₄ C₈-C₁₂-Alkyl ist; am meisten bevorzugt, wobei R₄ Octyl ist.

4. Polymer nach einem der Ansprüche 1 bis 3, wobei R₃ und R₅ unabhängig Wasserstoff oder Methyl sind; vorzugsweise, wobei R₃ bis R₅ Wasserstoff sind.

5. Polymer nach einem der Ansprüche 1 bis 4, wobei R₆ Wasserstoff, Methyl, Butyl oder Benzyl ist; vorzugsweise, wobei R₆ Methyl ist; oder wobei R₆ Wasserstoff ist.

6. Polymer nach Anspruch 5, wobei R₇ Aryl ist; vorzugsweise, wobei R₇ Phenyl ist.

7. Polymer nach einem der Ansprüche 1 bis 6, wobei R₉ Wasserstoff oder C₁-C₆-Alkyl ist;
vorzugsweise, wobei R₉ Wasserstoff ist.

8. Polymer nach einem der Ansprüche 1 bis 7, wobei das Polymer ein mittleres Molekulargewicht von etwa 1000 Dalton bis etwa 15000 Dalton aufweist; vorzugsweise, wobei das Polymer ein mittleres Molekulargewicht von etwa 4000 Dalton bis etwa 6000 Dalton aufweist.

9. Verfahren für die Herstellung des Polymers nach einem der Ansprüche 1 bis 8, das Verfahren umfassend:
Kontaktieren einer Verbindung, dessen Struktur Formel (3) entspricht: 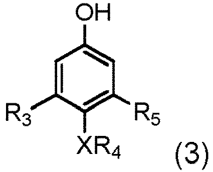
mit einem Aldehyd, um ein Polymer bereitzustellen, dessen Struktur Formel (4) entspricht: 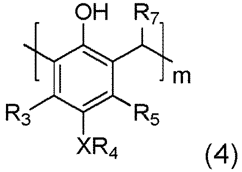
und Kontaktieren des Polymers von Formel (4) mit einem Epoxid, um das Polymer von Formel (5A) bereitzustellen;
wobei:
R₃ und R₅ unabhängig H oder C₁-C₂₂-Alkyl oder -Alkyloxy sind;
R₄ C₄₋₂₂-Alkyl ist;
R₇ H, Alkyl, Aryl oder Arylalkyl ist;
X -O- ist;
R₈ Wasserstoff oder C₁-C₄-Alkyl ist;
m eine ganze Zahl von 4 bis 75 ist; und
n eine ganze Zahl von 1 bis 20 ist.

10. Verfahren nach Anspruch 9, wobei die Verbindung, die die Struktur von Formel 3 aufweist, die Struktur von Formel 3A aufweist, 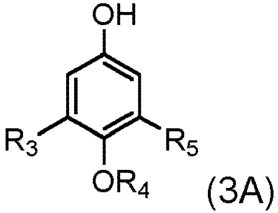 und das Polymer, das die Struktur von Formel 4 aufweist, die Struktur von Formel 4A aufweist

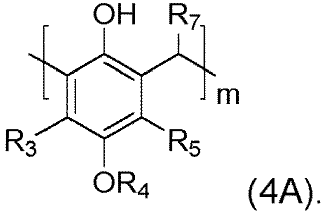

11. Verfahren nach Anspruch 10, wobei das Verfahren ferner den Schritt des Kontaktierens einer Verbindung umfasst, deren Struktur Formel (1) entspricht: 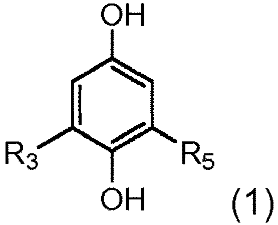
mit einer Verbindung, deren Struktur Formel (2) entspricht:
R₄-X (2)
um die Verbindung bereitzustellen, deren Struktur Formel (3) entspricht; wobei:
R₃ und R₅ unabhängig H oder C₁-C₂₂-Alkyl sind;
R₄ C₄₋₂₂-Alkyl ist; und
X Hydroxy oder Halogenid ist.

12. Verfahren zum Brechen einer Emulsion aus Wasser und Öl, umfassend ein Einbringen einer wirksamen Menge einer Emulsionsspalterzusammensetzung in Kontakt mit der Emulsion, um die Emulsion zu destabilisieren, wobei die Emulsionsspalterzusammensetzung ein Polymer nach einem der Ansprüche 1 bis 8 umfasst.

13. Verwendung einer Emulsionsspalterzusammensetzung, umfassend ein Polymer nach einem der Ansprüche 1 bis 8 zum Spalten einer Emulsion aus Wasser und Öl.

## Revendications

1. Polymère dont la structure correspond à la formule (5A) : 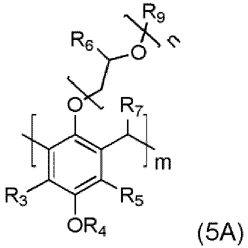 dans lequel :
R₃ et R₅ sont indépendamment H ou l'alkyle en C₁ en C₂₂ ou l'alkyloxy ;
R₄ est un alkyle en C_{4 à 22} ;
R₆ est H, un alkyle ou un aryle ;
R₇ est H, un alkyle, un aryle ou arylalkyle ;
R₉ est l'hydrogène, l'alkyle ou l'alkylaryle ;
m est un nombre entier de 4 à 75 ; et
n est un nombre entier allant de 1 à 20.

2. Polymère selon la revendication 1, dans lequel n est un nombre entier de 2 à 20 ; de préférence, dans lequel n est un nombre entier allant de 4 à 16 ; plus préférablement, dans lequel n est un nombre entier allant de 4 à 10.

3. Polymère selon la revendication 1 ou 2, dans lequel R₄ est un alkyle en C₄ à C₁₆ ; de préférence, dans lequel R₄ est alkyle en C₄-C₁₂ ; plus préférablement, dans lequel R₄ est alkyle en C₈-C₁₂ ; le plus préférablement, dans lequel R₄ est octyle.

4. Polymère selon l'une quelconque des revendications 1 à 3, dans lequel R₃ et R₅ sont indépendamment hydrogène ou méthyle ; de préférence, dans lequel R₃ et R₅ sont de l'hydrogène.

5. Polymère selon l'une quelconque des revendications 1 à 4, dans lequel R₆ est l'hydrogène, le méthyle, le butyle ou le benzyle ; de préférence, dans lequel R₆ est le méthyle ; ou, dans lequel R₆ est un hydrogène.

6. Polymère selon la revendication 5, dans lequel R₇ est un aryle ; de préférence, dans lequel R₇ est un phényle.

7. Polymère selon l'une quelconque des revendications 1 à 6, dans lequel R₉ est un alkyle en C₁ à C₆ ;
de préférence, dans lequel R₉ est un hydrogène.

8. Polymère selon l'une quelconque des revendications 1 à 7, dans lequel le polymère a une masse moléculaire moyenne allant d'environ 1 000 à environ 15 000 Daltons ; de préférence, dans lequel le polymère a un poids moléculaire moyen en poids d'environ 4000 Daltons à environ 6000 Daltons.

9. Procédé de préparation du polymère selon l'une quelconque des revendications 1 à 8, le procédé comprenant :
la mise en contact d'un composé dont la structure correspond à la formule (3) : 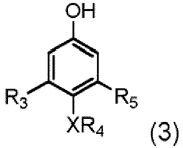
avec un aldéhyde pour obtenir un polymère dont la structure correspond à la formule (4) : 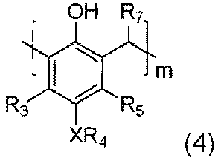
et la mise en contact du polymère de formule (4) avec un époxyde pour obtenir le polymère de formule (5A) ;
dans lequel :
R₃ et R₅ sont indépendamment H ou un alkyle en C₁ à C₂₂ ou un alkyloxy ;
R₄ est un alkyle en C_{4 à 22} ;
R₇ est H, un alkyle, un aryle ou arylalkyle ;
X est -O- ;
R₈ est hydrogène ou alkyle en C₁-C₄ ;
m est un nombre entier de 4 à 75 ; et
n est un nombre entier allant de 1 à 20.

10. Procédé selon la revendication 9, dans lequel le composé ayant la structure de la formule 3 a la structure de la formule 3A 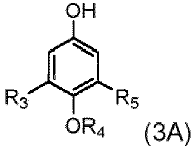 et le polymère ayant la structure de la formule 4 a la structure de la formule 4A

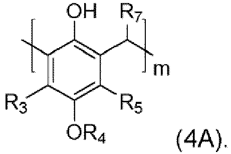

11. Procédé selon la revendication 10, dans lequel le procédé comprend en outre l'étape de mise en contact avec un composé dont la structure correspond à la formule (1) : 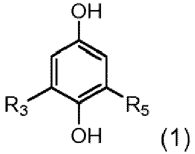
avec un composé dont la structure correspond à la formule (2) :
R₄-X (2)
pour obtenir le composé dont la structure correspond à la formule (3) ; dans lequel :
R₃ et R₅ sont indépendamment H ou un alkyle en C₁ à C₂₂ ;
R₄ est un alkyle en C₄ à ₂₂ ; et
X est un hydroxy ou un halogénure.

12. Procédé de rupture d'une émulsion d'eau et d'huile comprenant l'introduction d'une quantité efficace d'une composition de rupture d'émulsion en contact avec l'émulsion pour déstabiliser l'émulsion, dans lequel la composition de rupture d'émulsion comprend un polymère selon l'une quelconque des revendications 1 à 8.

13. Utilisation d'une composition de rupture d'émulsion comprenant un polymère selon l'une quelconque des revendications 1 à 8 pour rompre une émulsion d'eau et d'huile.
